# EUROPÄISCHE PATENTANMELDUNG

(11) **EP 2 816 066 A1**
(43) Veröffentlichungstag der Anmeldung: **24.12.2014**
(21) Anmeldenummer: 13172832.1
(22) Anmeldetag: 19.06.2013
(51) Int. Cl.: C08G 18/50, C08K 5/06, C08K 5/10, C08G 18/28, C08G 18/38, C08K 5/521, C08K 5/523

(54) **Emissionsarmes, stabilisiertes Polyurethan**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft ein Verfahren zur Herstellung von Polyurethanen bei dem man (a) Polyisocyanat, (b) polymeren Verbindungen mit gegenüber Isocyanaten reaktiven Gruppen, (c) Katalysatoren, (d) 0,01 bis 1 Gew.-% eines aliphatischen Kohlenwasserstoffs (d1) mit 2 bis 15 Kohlenstoffatomen, der mindestens ein Heteroatom, ausgewählt aus der Gruppe, bestehend aus Sauerstoff, Stickstoff und Schwefel, und mindestens ein Chlor- oder Bromatom enthalten und/oder Phosphorsäureester (d2), (e) Antioxidatien und/oder Lichtstabilisatoren und gegebenenfalls (f) Treibmittel, (g) Kettenverlängerungs- und oder Vernetzungsmittel und (h) Hilfsmittel und/oder Zusatzstoffe zu einer Reaktionsmischung vermischt und die Reaktionsmischung zum Polyurethan ausreagieren lässt, wobei der Phosphorsäureester der allgemeinen Formel (R¹-O)₃-P=O entspricht, wobei die drei Reste R¹ unabhängig voneinander für organische Reste stehen, die eine oder mehrere Phenylgruppen, eine oder mehrere Phosphorsäuregruppen (Polyalkylphosphat mit Ethylenoxyd) oder deren Ester und/oder ein oder mehrere Atome, ausgewählt aus der Gruppe, bestehend aus Stickstoff, Sauerstoff, Fluor, Chlor und Brom, enthalten. Weiter betrifft die vorliegende Erfindung Polyurethane, erhältlich nach einem erfindungsgemäßen Verfahren sowie die Verwendung dieser Polyurethane im Innenraum von Verkehrsmitteln.

## Beschreibung

Die vorliegende Erfindung betrifft ein Verfahren zur Herstellung von Polyurethanen bei dem man (a) Polyisocyanat, (b) polymeren Verbindungen mit gegenüber Isocyanaten reaktiven Gruppen, (c) Katalysatoren, (d) 0,01 bis 1 Gew.-% eines aliphatischen Kohlenwasserstoffs (d1) mit 2 bis 15 Kohlenstoffatomen, der mindestens ein Heteroatom, ausgewählt aus der Gruppe, bestehend aus Sauerstoff, Stickstoff und Schwefel, und mindestens ein Chlor- oder Bromatom enthalten und/oder Phosphorsäureester (d2), (e) Antioxidantien und/oder Lichtstabilisatoren und gegebenenfalls (f) Treibmittel, (g) Kettenverlängerungs- und/oder Vernetzungsmittel und (h) Hilfsmittel und/oder Zusatzstoffe zu einer Reaktionsmischung vermischt und die Reaktionsmischung zum Polyurethan ausreagieren lässt, wobei der Phosphorsäureester der allgemeinen Formel (R¹-O)₃-P=O entspricht, wobei die drei Reste R¹ unabhängig voneinander für organische Reste stehen, die eine oder mehrere Phenylgruppen, eine oder mehrere Phosphorsäuregruppen (Polyalkylphosphat mit Ethylenoxyd) oder deren Ester und/oder ein oder mehrere Atome, ausgewählt aus der Gruppe, bestehend aus Stickstoff, Sauerstoff, Fluor, Chlor und Brom, enthalten. Weiter betrifft die vorliegende Erfindung Polyurethane, erhältlich nach einem erfindungsgemäßen Verfahren sowie die Verwendung dieser Polyurethane im Innenraum von Verkehrsmitteln.

Polyurethane zeichnen sich durch vielfältige Einsatzmöglichkeiten aus. Insbesondere im Automobilbau werden diese häufig aufgrund ihrer vielfältigen Eigenschaften eingesetzt. An Polyurethane, die im Automobilbereich, eingesetzt werden, werden hohe Anforderungen gestellt. So werden hervorragende mechanische Eigenschaften verlangt, die sich über die Lebensdauer des Automobils nicht ändern, damit die Polyurethane je nach Einsatzgebiet sowohl ihre Aufgabe im täglichen Gebrauch, beispielsweise die Polsterungseigenschaften, haptische Eigenschaften, oder Stabilisierungseigenschaften nicht verlieren. Dabei sind Polyurethane für Automobilanwendungen extreme klimatischen Bedingungen ausgesetzt, wie Sonneneinstrahlung, Feuchte und extremen Temperaturen im Bereich von weniger als - 10 °C bis an 100 °C, die die Alterung des Polyurethans beschleunigen.

Diese starken Belastungen der Kunststoffe erfordert eine Stabilisierung der Polyurethane durch die Zugabe von Additiven, wie UV- und Lichtstabilisatoren und Antioxidantien. Allerdings führt die Zugabe dieser Stabilisatoren zu Emissionen, die im Automobil als Geruchsbelästigung wahrgenommen werden können. Insbesondere Teile, die sowohl als Außenbauteile gelten und daher besonders gegen UV- und Feuchtigkeitsbelastung stabilisiert sein müssen, die aber auch in den Automobil-Innenraum hineinreichen, wie Dichtungen für Scheiben, stellen durch ihren hohen Stabilisatorgehalt und damit hohe Emissionen ein Problem dar. Polyurethane für den Einsatz als Dichtungsmaterial für Glasscheiben, insbesondere für Automobile und deren Herstellung sind bekannt und beispielsweise in US 5421940, US5362428, US 6228305, WO 98/14492, EP 355209 und EP 1577080 beschrieben.

Aufgabe der vorliegenden Erfindung war es daher die Emissionen von hoch stabilisierten Polyurethanen zu verringern ohne die mechanischen Eigenschaften sowie die Alterungseigenschaften dieser Kunststoffe zu beeinträchtigen.

Die erfindungsgemäße Aufgabe wurde überraschenderweise gelöst durch ein Polyurethan, erhältlich nach einem Verfahren bei dem man (a) Polyisocyanat, (b) polymeren Verbindungen mit gegenüber Isocyanaten reaktiven Gruppen, (c) Katalysatoren, (d) 0,01 bis 1 Gew.-% eines aliphatischen Kohlenwasserstoffs (d1) mit 2 bis 15 Kohlenstoffatomen, der mindestens ein Heteroatom, ausgewählt aus der Gruppe, bestehend aus Sauerstoff, Stickstoff und Schwefel, und mindestens ein Chlor- oder Bromatom enthalten und/oder Phosphorsäureester (d2), (e) Antioxidantien und/oder Lichtstabilisatoren und gegebenenfalls (f) Treibmittel, (g) Kettenverlängerungs- und oder Vernetzungsmittel und (h) Hilfsmittel und/oder Zusatzstoffe zu einer Reaktionsmischung vermischt und die Reaktionsmischung zum Polyurethan ausreagieren lässt, wobei der Phosphorsäureester der allgemeinen Formel (R¹-O)₃-P=O entspricht, wobei die drei Reste R¹ unabhängig voneinander für organische Reste stehen, die eine oder mehrere Phenylgruppen, eine oder mehrere Phosphorsäuregruppen (Polyalkylphosphat mit Ethylenoxyd) oder deren Ester und/oder ein oder mehrere Atome, ausgewählt aus der Gruppe, bestehend aus Stickstoff, Sauerstoff, Fluor, Chlor und Brom, enthalten.

Insbesondere handelt es sich vorzugsweise um Polyurethane mit einer Dichte von mindestens 400 g/L, vorzugsweise 850 bis 1500 g/L und besonders bevorzugt 950 bis 1350 g/L. Besonders bevorzugt sind massive Polyurethane. Dabei wird ein massives Polyurethan im Wesentlichen ohne Zugabe eines Treibmittels erhalten. Geringe Mengen an Treibmittel, beispielsweise Wasser, das herstellungsbedingt in den Polyolen enthalten ist, gilt dabei nicht als Treibmittel. Vorzugsweise enthält die Reaktionsmischung zur Herstellung des kompakten Polyurethans weniger als 0,2 Gew.-%, besonders bevorzugt weniger als 0,1 Gew.-% und insbesondere weniger als 0,05 Gew.-% Wasser.

Die zur Herstellung der erfindungsgemäßen Polyurethane verwendeten Polyisocyanatkomponenten (a) umfassen alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 4,4'-Diisocyanatodicyclohexylmethan (H₁₂MDI) oder dessen Oligomere 2,4- oder 2,6-Toluylendiisocyanat (TDI) oder deren Mischungen, Tetramethylendiisocyanat oder dessen Oligomere, Hexamethylendiisocya-nat (HDI) oder dessen Oligomere, Naphtylendiisocyanat (NDI) oder Mischungen daraus.

Bevorzugt werden 2,4- und/oder 2,6-Tolylendiisocynat (TDI) oder deren Mischungen, monomere Diphenylmethandiisocyanate und/oder höherkernige Homologe des Diphenylmethandiiso-cyanats (Polymer-MDI) und deren Mischungen verwendet. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Die Polyisocyanatkomponente (a) kann in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polymeren Verbindungen mit gegenüber Isocyanaten reaktiven Gruppen (b) (Bestandteil (a-2)) und/oder Kettenverlängerern (c) (Bestandteil (a-3)) zum Isocyanatprepolymer umgesetzt werden.

Polymere Verbindungen mit gegenüber Isocyanaten reaktiven Gruppen (a-2) und Kettenverlängerungsmittel (a3) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polymere Verbindungen mit gegenüber Isocyanaten reaktiven Gruppen (a-2) auch die nachfolgend unter (b) beschriebenen Polymere Verbindungen mit gegenüber Isocyanaten reaktiven Gruppen eingesetzt werden.

Als polymere Verbindungen mit gegenüber Isocyanaten reaktiven Gruppen (b) können alle bekannten Verbindungen mit mindestens zwei gegenüber Isocyanaten reaktiven Wasserstoffatomen eingesetzt werden, beispielsweise solche mit einer Funktionalität von 2 bis 8 und einem zahlenmittleren Molekulargewicht von 400 bis 15000 g/mol. So können beispielsweise Verbindungen, ausgewählt aus der Gruppe der Polyetherpolyole, Polyesterpolyole oder Mischungen daraus, verwendet werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole werden z.B. hergestellt aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Neben den beschriebenen Polyetherolen und Polyesterolen können auch füllstoffhaltige Polyetherole oder Polyesterole, auch als Polymerpolyetherole oder Polymerpolyesterole bezeichnet, eingesetzt werden. Solche Verbindungen enthalten vorzugsweise dispergierte Partikel aus thermoplastischen Kunststoffen, beispielsweise aufgebaut aus olefinischen Monomeren, wie Acrylnitril, Styrol, (Meth)Acrylaten, (Meth)Acrylsäure und/oder Acrylamid. Solche Füllstoffhaltigen Polyole sind bekannt und kommerziell erhältlich. Ihre Herstellung ist beispielweise be-schrieben in DE 111 394, US 3 304 273, US 3 383 351, US 3 523 093, DE 1 152 536, DE 1 152 537 WO 2008/055952 und WO2009/128279.

In einer besonders bevorzugten Ausführungsform der vorliegenden Erfindung enthält die Komponente (b) Polyetherole und weiter bevorzugt keine Polyesterole.

Katalysatoren c) beschleunigen die Reaktion der Polyole (b) und gegebenenfalls Kettenverlängerungs- und Vernetzungsmittel (f) sowie chemischem Treibmittel (e) mit den organischen, gegebenenfalls modifizierten Polyisocyanaten (a) stark. Dabei können übliche Katalysatoren zur Herstellung der Polyurethane eingesetzt werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylen-diamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Weiter können bekannte, einbaubare Aminkatalysatoren verwendet werden. Diese weisen mindestens eine, vorzugsweise 1 bis 8 und besonders bevorzugt 1 bis 2 gegenüber Isocyanaten reaktive Gruppen, wie primäre Amingruppen, sekundäre Amingruppen, Hydroxylgruppen, Amide oder Harnstoffgruppen, auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Sollen die Emissionen weiter verringert werden, werden ausschließlich einbaubare Katalysatoren als Katalysatoren (c) eingesetzt oder Mischungen aus einbaubaren und nicht einbaubaren Katalysatoren.

Werden Katalysatoren (c) eingesetzt, können diese beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b) eingesetzt werden.

Zur Herstellung des erfindungsgemäßen Polyurethans werden als Verbindung (d) ein oder mehrere aliphatische Kohlenwasserstoffe (d1) mit 2 bis 15 Kohlenstoffatomen, der mindestens ein Heteroatom, ausgewählt aus der Gruppe, bestehend aus Sauerstoff, Stickstoff und Schwefel, und mindestens ein Chlor- oder Bromatom enthält und/oder Phosphorsäureester (d2) eingesetzt. Dabei können jeweils Einzelstoffe oder Mischungen eingesetzt werden, wobei der Gesamtanteil der Verbindungen (d1) und (d2) 0,01 bis 2 Gew.-%, bevorzugt 0,02 bis 1 Gew.-% und insbesondere 0,05 bis 0,5 Gew.-%, jeweils bezogen auf das Gesamtgewicht der Komponenten (a) bis (h), beträgt.

Als Komponente (d1) werden aliphatische Kohlenwasserstoffe mit 2 bis 15, bevorzugt 3 bis 10, weiter bevorzugt 3 bis 6 und insbesondere 3 bis 4 Kohlenstoffatomen, die mindestens ein Heteroatom, ausgewählt aus der Gruppe, bestehend aus Sauerstoff, Stickstoff und Schwefel, und mindestens ein Brom- und/oder Chloratom, vorzugsweise 2, 3 oder 4 Brom- und/oder Chloratome, besonders bevorzugt 2 oder 3 Brom- und/oder Chloratome, enthalten, eingesetzt. In einer weiteren bevorzugten Ausführungsform enthält die Verbindung (d1) nur ein Brom- oder Chloratom. Als Brom- und/oder Chloratom enthält der aliphatische Kohlenwasserstoff (d1) vorzugsweise Chlor. Dabei beträgt der Gehalt an Brom- und/oder Chloratomen, besonders bevorzugt an Chlor, vorzugsweise mindestens 20 Gew.-%, besonders bevorzugt mindestens 30 Gew.-% und insbesondere mindestens 40 Gew.-%, jeweils bezogen auf das Gesamtgewicht der Komponente (d1). Vorzugsweise enthält der aliphatische Kohlenwasserstoff (d1) mindestens ein Brom- und/oder Chloratom, das an ein primäres Kohlenstoffatom gebunden ist.

Der aliphatische Kohlenwasserstoff (d1) kann dabei linear, verzweigtkettig oder cyclisch sein und ist bevorzugt linear oder verzweigtkettig. Dabei kann das Heteroatom endständig oder inmitten der Kette als Brückenatom vorliegen. Beispiele für Heteroatome inmitten der Kette sind Ethergruppen -O-, Thioethergruppen -S- oder tertiäre Stickstoffgruppen. Ist mindestens ein Heteroatom in der Mitte der Kette vorhanden, so handelt es sich vorzugsweise um eine Ethergruppe. Anstelle des Brückenatoms oder zusätzlich zum Brückenatom enthält der aliphatische Kohlenwasserstoff (d1) mindestens eine Gruppe, die gegenüber Isocyanatgruppen reaktive Wasserstoffatome aufweist. Solche Gruppen sind beispielsweise -SH Gruppen, -NH- Gruppen, -NH₂ Gruppen oder -OH Gruppen. Besonders bevorzugt weist die Verbindung (d) mindestens eine OH-Gruppe auf. Weiter bevorzugt weist der aliphatische Kohlenwasserstoff (d1) zusätzlich zu der -OH Gruppe ein Brückenatom, besonders bevorzugt mindestens eine Ethergruppe, auf. In einer besonders bevorzugten Ausführungsform liegen zwischen dem Brom- und/oder Chloratom und dem Heteroatom nicht mehr als 3 Kohlenstoffatome, vorzugsweise nicht mehr als 2 Kohlenstoffatome. Insbesondere enthält die Verbindung (d1) eine OH-Gruppe, vorzugsweise am Nachbarkohlenstoffatom zu dem Kohlenstoffatom, das das Brom- oder Chloratom trägt. Dabei enthält der aliphatische Kohlenwasserstoff (d1) kein Phosphorsäureester, Polyphosphat, Phosphonsäureester oder Phosphorigsäureester, bevorzugt enthält der aliphatische Kohlenwasserstoff (d1) keine Phosphoratome.

Erfindungsgemäße aliphatische Kohlenwasserstoffe (d1) weisen vorzugsweise eine Siedetemperatur unter Normalbedingungen von mindestens 100, besonders bevorzugt mindestens 120 und insbesondere mindestens 150 °C auf.

Beispiele für bevorzugte aliphatische Kohlenwasserstoffe (d1) sind 1,3-Dichlor-2-propanol, 1,1,1-Trichloro-2-methyl-2-propanol hemihydrate, 2-[2-(2-Chloroethoxy)ethoxy]ethanol, 2-(2-Chlorethoxy)ethanol, Bis(2-(2-chlorethoxy)ethyl)ether, 1,2-Dichlor-3-propanol, 3-Chlor-1-propanol, 3-Chlor-2,2,dimethyl-1-propanol, 1-Chlor-2-propanol, 2-Chlor-1-propanol, 3-Brom-1-propanol, 4-Chlor-1-butandiol, 5-Chlor-1-pentanol und 6-Chlor-1-hexanol. Besonders bevorzugt sind 1,3-Dichlor-2-propanol, 1,2-Dichlor-3-propanol, 1-Chlor-2-propanol und3-Chlor-propanol, insbesondere 1,3-Dichlor-2-propanol, 1-Chlor-2-propanol und 3-Chlor-propanol.

Komponente (d2) enthält Phosphorsäureester. Diese weisen vorzugsweise ein Molekulargewicht von mindestens 350 g/mol auf. Ebenfalls bevorzugt sind Phosphorsäureester (d2), die mindestens eine gegenüber Isocyanaten reaktive Gruppe, beispielsweise OH-Gruppe, aufweisen.

Dabei werden als Phosphorsäureester solche Ester der Phosphorsäure eingesetzt, die der allgemeinen Formel

(R¹-O)₃-P=O

entsprechen, wobei die drei Reste R¹ unabhängig voneinander für organische Reste stehen, die eine oder mehrere Phenylgruppen, eine oder mehrere Phosphorsäuregruppen oder deren Ester und/oder ein oder mehrere Atome, ausgewählt aus der Gruppe bestehend aus Stickstoff, Sauerstoff, Fluor, Chlor und Brom enthalten. Dabei enthalten die Reste R¹ jeweils unabhängig voneinander vorzugsweise 1 bis 20, besonders bevorzugt 2 bis 10 und insbesondere 2 bis 5 Kohlenstoffatome und können aromatisch, verzweigt oder linear sein. Vorzugsweise sind die Reste aliphatisch. Bevorzugt sind Reste, die Chloratome oder Sauerstoffatome, beispielsweise als OH-Endgruppen, aufweisen. Beispiele für die Reste R1 sind Ethylenchlorid, Propylenchlorid, Butylenchlorid, Ethylenoxyd, Propylenoxyd, Butylenoxyd uns Polyethyalkylenoxide mit vorzugsweise 2 bis 10 Widerholungseinheiten.

Vorzugsweise enthalten die erfindungsgemäßen Phosphorsäureester (d2) mindestens zwei, vorzugsweise zwei bis 50, besonders bevorzugt 2 bis 20 Phosphatgruppen in einem Molekül, die durch mehrwertige Reste, insbesondere durch zweiwertige Reste -R"- verbunden sind. Dabei steht R" für einen organischen Rest mit 1 bis 20, vorzugsweise 2 bis 10 und insbesondere 2 bis 5 Kohlenstoffatomen, die aromatisch oder aliphatisch, vorzugsweise aliphatisch linear oder verzweigt, bevorzugt verzweigt, sein können und gegebenenfalls ein oder mehrere Atome, ausgewählt aus der Gruppe bestehend aus Stickstoff, Sauerstoff, Fluor, Chlor und Brom enthalten. Dies Phosphorsäureester gemäß Erfindung umfassen beispielsweise 2,2-bis(chloromethyl)tri-methylene-bis(bis(2-chloroethyl)phosphat), Tris(2-butoxyethyl)phosphat, Tris(1,3-dichlor-2-isopropyl)phosphat Tris(2-chlorisopropyl)phosphat und oligomere Alkylphosphate mit Ethylenoxydbrücken, wie Fyrol® PNX der Firma ICL Industrial Products.

Als Antioxidantien und/oder Lichtstabilisatoren (e) können alle für Polyurethan bekannten Antioxidatinsmittel und Lichtstabilisatoren eingesetzt werden. Diese umfassen gehinderte Amin-Lichtstabilisatoren, sogenannte HALS (Hindered Amin Light Stabilizer), die als Struktureinheit eine oder mehrere 2,2,6,6-tetramethyl piperidine-Einheiten aufweisen. Solche Verbindungen können beispielsweise unter den Handelsnamen Uvinul® 5050 H, Uvinul® 4077 H, Tinuvin® 770, UV-77, JPT, Sabostab® UV 70, Sanol® LS-770, Adekastab® LA-77, HS-770, Uvinul® 4050 H Uvinul® 4077 H, Tinuvin® 622, Sabostab® UV 62, Uvinul® 5062 H, Chisorb® 622; Tinuvin® 144, Tinuvin® 765, Tinuvin®292, Tinuvin® 123, Tinuvin® 5100, Chimassorb® 119, Chimassorb® 944, Adekastab® LA-94, Sanol® LS 944, Tinuvin® 783, Tinuvin® XT 833, Mark LA52 FI, oder Adekastab® LA-52 erworben werden. Neben gehinderten Aminen können Verbindungen mit einer oder mehrerer der allgemeinen Struktureinheiten, ausgewählt aus der Gruppe, bestehend aus Benzophenon, Benztriazol, Cyanoacrylat, Cinamat, Oxanilid, Formamidin, Triazin, Benzyliden-Malonat als Lichtstabilisatoren, insbesondere gegen UV-Strahlung eingesetzt werden. Beispiele für diese Verbindungen sind unter den Handelsnahmen Uvinul® 3008, Chimassorb® 81, CH81 DRIED, Kemisorb® 12, Seesorb® 102, Adekastab® 1413, Adekastab® LA-51, Viosorb® 130, Uvinul® 3026, Tinuvin®326, Tinogard® AS, Kemisorb® 73, Seesorb® 703, Adekastab® LA-36, Viosorb® 550, Sumisorb® 300, UV-730, Tomisorb® 600, Uvinul® 3027, Tinuvin® 327, Kemisorb® 72, Seesorb® 702, Adekastab® LA-34, Viosorb® 580, UV-750, Tomisorb® 700, Uvinul® 3028, BLS 1328, Cyasorb® UV-2337, Tinuvin® 328, Kemisorb® 74, Seesorb® 704, Viosorb® 591, Sumisorb® 350, Uvinul® 3029, Tinuvin® 329, UV5411, Kemisorb® 79, Seesorb® 709, Viosorb® 583, Sumisorb® 340, Uvinul® 3033 P, BLS 1710, Kingsorb® 71, Tinuvin® P, Kemisorb® 71, Seesorb® 701, Adekastab® LA-32, Viosorb® 520, Sumisorb® 200, UV-710, Tomisorb® 100, Uvinul® 3030, Uvinul® 3035, Uvinul® 3039, Uvinul® N 539 T, Uvinul® 3088, Tinosorb® OMC, Uvinul® MC 80 N, Tinuvin® 213, Eversorb® 80, Tinuvin® 234, Uvinul® 3034, Tinuvin® 900, Eversorb® 234, Seesorb® 706, Viosorb® 590, Sumisorb® 590, Tinuvin® 312, Sanduvor® VSU Powder, Tinuvin® 571, Tinuvin® 171, Tino-gard® TL, Additive NX Tinubin®571, Chisorb® 971, Tinuvin® 101, Zikasorb® R, Additive TS 3111, Cyasorb® 1164, Uvinul® 3000, Sanduvor® PR25, Hostavin® PR25, NEPA, Tinuvin® 384, Tinuvin®99, Eversorb®81, CGL 384 Distilled, Tinuvin®1577, Tinuvin®360, Tinosorb® MBBT, Lowilite® 36, Tinuvin® 320, Kemisorb® 75, Seesorb® 705, Adekastab® LA-38, Viosorb® 582 und Sumisorb® 320, erhältlich.

Als Antioxidantien werden insbesondere Verbindungen eingesetzt, die eine oder mehrere der Struktureinheiten, ausgewählt aus sterisch gehinderten Phenolen, Sulfiden oder Benzoaten enthalten. Dabei sind bei sterisch gehinderten Phenolen die beiden Orthowasserstoffe durch Verbindungen substituiert, die nicht Wisserstoff sind und vorzugsweise mindestens 1 bis 20 besonders bevorzugt 3 bis 15 Kohlenstoffatome tragen und vorzugsweise verzweigt sind. Auch Benzoate tragen vorzugsweise in Orthoposition zur OH-Gruppe Substituenten, die nicht Wasserstoff sind und besonders bevorzugt 1 bis 20, insbesondere 3 bis 15 Kohlenstoffatome tragen, die vorzugsweise verzweigt sind. Beispiele für diese Verbindungen sind unter den Handelsnahmen Irganox® 245 FF, Irganox® 245, Songnox® 2450 FF, Irganox® 1010, Anox® 20, Betenox® 1010, Ashland® AO 610, BNX 1010, Dovernox® 10, Irganox® L 101, Songnox® 1010, Spül-IX 1010, Tinogard® TT, VX IX 1010 ED, VXDD IX 1010 ED, Adekastab® AO-60, Sumilizer® BP-101, Tominox® TT, Irganox® 1098, Plaox®-1098, Lowinox® HD98, Chinox® 1098, Tinuvin® 144, Irganox® 1135, CA 505, Irganox® L135, Irgastab® BD 50, KPA 2399, Lubad® 668, Naugalube® 531, Naugard® PS-48, OIC 135, OX BF, Stock 3074, Irganox® 1076, BNX 1076, Anox® PP 18, Naugard® 76, Tinogard® TS, Adekastab® AO-50, Sumilizer® BP-76, Tominox® SS, Irganox® 1425, Irgamod® 195, Antioxidant 1425, Irganox® 3114, Irganox® 1330 Ethanox® 330, Kingnox® 1330, Adekastab® AO-330, Irganox® 1081, Irganox® E201, Tocopherylquinone, DL-alpha-Tocopherol, Irganox® PS 800, Arenox® DL, Dilaurylthiodipropionat (DLTDP), Irganox® PS 802, Arenox® DS, Cyanox® STDP-SP Powder, DSTP, Kingnox® DSTDP, Irganox® 565, Tinogard® MD1, Irganox® 1035, Irganox® L115, Irganox® 1520, Irgastab® cable KV 10, Irganox® 1726, Irganox® 3052, Irganox® MD 1024, Lowinox® MD24, Thanox® MD 1024, Irgastab® MBS 11, Irgastab® PVC 11, Irgastab® PVC 11 EM, Irgastab® PUR 55, Irgastab® PUR 67, Irgastab® PUR 68, Irganox® B 1171, Irganox® B 215, Irganox® B 225, Irganox® B 220, Irganox® B 561, Irganox® B 612, Tinuvin® XT 833, Yoshinox® SR, Irganox® 415, Lowinox® TBM, Sangonox® TBMC, Tinuvin®120, Kemisorb® 112, Seesorb® 712, Adekastab® LA-12, Viosorb® 80, Sumisorb® 400, Adekastab® AO-40, Sumilizer® BBM-S und Lowinox® 44B25 erhältlich.

Besonders bevorzugt enthalten die erfindungsgemäß eingesetzten Antioxidantien und/oder Lichtstabilisatoren (e) mindestens eine Ester- oder Ethergruppe, wobei jeweils in Nachbarschaft zu den Sauerstoffatomen der Ester- oder Ethergruppe im Molekül des Antioxidants oder des Lichtstabilisators ein Kohlenstoffatom steht. Beispiele hierfür sind Uvinul® 4077 H, Tinuvin®770, UV-77, JPT, Sabostab® UV 70, Sanol® LS-770, Adekastab® LA-77, HS-770, Uvinul® 3008, Chimassorb® 81, CH81 DRIED, Kemisorb® 12, Seesorb® 102, Adekastab® 1413, Adekastab® LA-51, Viosorb® 130, Uvinul® 3030, Uvinul® 3035, Uvinul® 3039, Uvinul® N 539 T, Uvinul® 3088, Tinosorb® OMC, Uvinul® MC 80 N, Irganox® 245 FF, Irganox® 245, Songnox® 2450 FF, Tinuvin®622, Sabostab® UV 62, Uvinul® 5062 H, Chisorb® 622, Tinuvin®213, Eversorb® 80, Tinuvin®312, Cyasorb® 1164, Sanduvor® PR25, Hostavin® PR25, NEPA, Irganox® 1010, Anox® 20, Betenox® 1010, Ashland® AO 610, BNX 1010, Dovernox® 10, Irganox® L 101, Songnox® 1010, Spül-IX 1010, Stock 4413, Tinogard® TT, VX IX 1010 ED, VXDD IX 1010 ED, Adekastab® AO-60, Sumilizer® BP-101, Tominox® TT, Tinuvin®144, Tinuvin®765, Tinuvin® 292, Irganox® 1135, CA 505, Irganox® L135, Irgastab® BD 50, KPA 2399, Lubad® 668, Naugalube® 531, Naugard® PS-48, OIC 135, OX BF, Stock 3074, Tinuvin®384, Tinuvin®99, Eversorb® 81, Irganox® 1076, BNX 1076, Anox® PP 18, Naugard® 76, Tinogard® TS, Adekastab® AO-50, Sumilizer BP-76, Tominox® SS, Tinuvin®1577, Tinuvin®123, Tinuvin®5100, Irganox® PS 800, Arenox® DL, Dilaurylthiodipropionat (DLTDP), Irganox® PS 802, Arenox® DS, Cyanox® STDP-SP Powder, DSTP, Kingnox® DSTDP, Irganox® 1035, Irganox® L115, Irganox® 3052, Irgastab® PUR 67, Irgastab® PUR 68, Mark LA52 FI, Adekastab® LA-52, Tinuvin®120, Kemisorb® 112, Seesorb® 712, Adekastab® LA-12, Viosorb® 80 und Sumisorb® 400.

Der Anteil der Verbindung (e), bezogen auf das Gesamtgewicht der Komponenten (a) bis (h) beträgt vorzugsweise mehr als 0,1 Gew.-%, besonders bevorzugt von 0,3 bis 10 Gew.-% und insbesondere von 0,5 bis 5 Gew.-%.

Wenn das erfindungsgemäße Polyurethan als Polyurethan-Schaumstoff vorliegen soll, enthalten erfindungsgemäße Reaktionsmischungen noch Treibmittel (f). Dabei können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüssiges Kohlendioxid. Dabei kann das Treibmittel in jeder beliebigen Menge eingesetzt werden. Vorzugsweise wird das Treibmittel in einer Menge eingesetzt, dass der resultierende Polyurethanschaumstoff eine Dichte von 10 bis 850 g/L, besonders bevorzugt 20 bis 800 g/L und insbesondere 25 bis 500 g/L aufweist. Besonders bevorzugt werden Treibmittel, enthaltend Wasser eingesetzt. Vorzugsweise werden keine Treibmittel (e) eingesetzt.

Als Kettenverlängerer und Vernetzungsmittel (g) können Verbindungen mit mindestens zwei gegenüber Isocyanaten reaktiven Gruppen eingesetzt werden, die ein Molekulargewicht von weniger als 400 g/mol aufweisen, wobei Moleküle mit zwei gegenüber Isocyanat reaktiven Wasserstoffatomen als Kettenverlängerer und Moleküle mit mehr als zwei gegenüber Isocyanat reaktiven Wasserstoffen als Vernetzer bezeichnet werden. Dabei kann jedoch auch auf das Kettenverlängerungs- oder Vernetzungsmittel verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Werden Kettenverlängerungsmittel und/oder Vernetzungsmittel (g) eingesetzt, können die bei der Herstellung von Polyurethanen bekannten Kettenverlängerer und/oder Vernetzer eingesetzt werden. Dies sind vorzugsweise niedermolekulare Verbindungen mit gegenüber Isocyanaten reaktiven funktionellen Gruppen, beispielsweise Glycerin, Trimethylolpropan, Glycol und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben.

Weiter können Hilfsmittel und/oder Zusatzstoffe (h) eingesetzt werden. Dabei können alle zur Herstellung von Polyurethanen bekannten Hilfs- und Zusatzstoffe verwendet werden. Genannt seien beispielsweise oberflächenaktive Substanzen, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben.

Im Allgemeinen werden bei der Herstellung des erfindungsgemäßen Polyurethans Einsatzstoffe in solchen Mengen zur Umsetzung gebracht, dass das Verhältnis von NCO-Gruppen der Polyisocyanate (a) zur Summe der reaktiven Wasserstoffatome der Komponenten (b), (c), (d) und gegebenenfalls (e), (f) und (g) 0,75 bis 1,5:1, vorzugsweise 0,80 bis 1,25:1 beträgt. Falls die zelligen Kunststoffe zumindest teilweise Isocyanuratgruppen enthalten, wird üblicherweise ein Verhältnis von NCO-Gruppen der Polyisocyanate (a) zur Summe der reaktiven Wasserstoffatome der Komponente (b), (c), (d) und gegebenenfalls (e) und (f) von 1,5 bis 20:1, vorzugsweise 1,5 bis 8:1 verwendet. Ein Verhältnis von 1:1 entspricht dabei einem Isocyanatindex von 100.

Die erfindungsgemäßen Polyurethane werden vorzugsweise im Innenraum von Fahrzeugen, wie Luftfahrzeugen, Landfahrzeugen oder Wasserfahrzeugen, besonders bevorzugt im Innenraum von Automobilen eingesetzt, beispielsweise als klares Beschichtungsmittel für Holz oder Holzimitate. Besonders bevorzugt werden die erfindungsgemäßen Polyurethane für Bauteile eingesetzt, die sowohl in den Innenraum als auch den Außenbereich der Fahrzeuge reichen. Ein Beispiel für eine solche Anwendung ist die Anwendung als Dichtung für Scheiben, insbesondere für Glasscheiben, wie die Windschutzscheibe von Automobilen. Die Herstellung solcher Dichtungen ist bekannt und beispielsweise in US 5421940, US5362428, US 6228305, WO 98/14492, EP 355209 und EP 1577080 beschrieben.

Im Folgenden soll die vorliegende Erfindung anhand von Beispielen verdeutlicht werden.

Ausgangsmaterialien:
- Polyol A:: Polyetherol mit einer OH-Zahl 27 mg KOH/g und einer Funktionalität von 2.5 auf Basis von Ethylenoxyd und Propylenoxid, einem Propylenoxidgehalt von 78 Gew.-% und einem Ethylenoxidgehalt von 21 Gew.-%
- MEG:: Monoethylenglykol
- Schwarzpaste:: Dispersion von Ruß in Polyetherpolyol mit einer OH-Zahl 22 mg KOH/g auf Basis von Ethylenoxyd und Propoylenoxid
- TEDA:: Triethylendiamin
- Fomrez UL32:: Katalysator der Firma GE Silicones
- Irganox 1135:: Antioxidant der Firma BASF gemäß der Formel

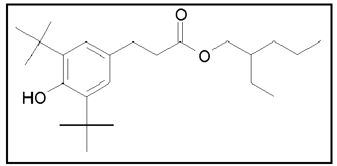

- Tinuvin 765:: Antioxidant der Firma BASF gemäß der Formel 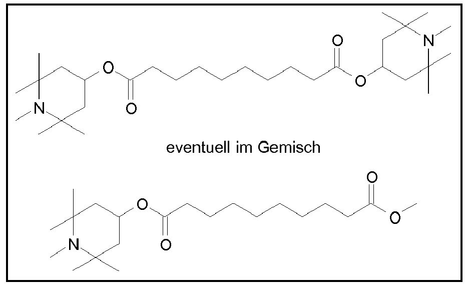
Additive
- A1:: Fyrol® PNX - Oligomerer Phosphatester der Firma ICL Industrial Products
- A2:: 3-Chlor-1-propanol
- A3:: 2,2-bis(chloromethyl)trimethylene-bis(bis(2-chloroethyl)phosphat)

- Isocyanat A:: Carbodiimid-modifiziertes 4,4'-MDI mit einem NCO-Gehalt von 26.2

Die Mischung A wurde durch Vermischen von folgenden Komponenten hergestellt:

| | | |
|---|---|---|
| 84.18 | Gew.-Teile | (TI.) Polyol A |
| 9.0 | Gew.-Teile | MEG |
| 5.0 | Gew.-Teile | Schwarzpaste |
| 0.02 | Gew.-Teile | TEDA |
| 0.1 | Gew.-Teile | Fomrez UL32 |
| 0.4 | Gew.-Teile | Irganox 1135 |
| 1.1 | Gew.-Teile | Tinuvin 765 |
| 0.1 | Gew.-Teile | Additive A1 bis A3 gemäß Tabelle 1 |

Die Mischung A und die Isocyanat-Komponente A sowie die Additiven gemäß Tabelle 1 wurden bei einem Isocyanatindex von 100 miteinander vermischt und in eine geschlossene Form gegeben, so dass Formteile mit einer mittleren Dichte von 1050 g/L erhalten wurden.

Zur Bestimmung der Messwerte für die mechanischen Eigenschaften wurde gemäß der folgenden Normen vorgegangen.

| Eigenschaft | Dimension | DIN-Norm |
|---|---|---|
| Härte | Shore A | 53505 |
| Dichte | g/mm³ | 845 |

Zur Bestimmung der VOC und FOG Werte wurde gemäß der VDA 278 vorgegangen.

Tabelle 1: VOC und FOG Werte (ppm) nach der VDA 278 der erhaltenen Elastomeren bei Zugabe der jeweiligen Additiven A1 bis A3.

**Tabelle 1**

| Platten Shore A 87 | VOC | | FOG | |
|---|---|---|---|---|
| | Total | TEDA¹ | Total | AOX² |
| Referenz | 83 | 49 | 490 | 455 |
| A1 (0.1TI) | 78 | 37 | 376 | 347 |
| A2 (0.1 TI) | 79 | 32 | 360 | 329 |
| A3 (0.1 TI) | 49 | 33 | 223 | 202 |

| | | | | |
|---|---|---|---|---|
| ¹TEDA Anteil in VOC ²Antioxidantien Anteil in FOG | | | | |

## Patentansprüche

1. Verfahren zur Herstellung von Polyurethanen bei dem man
(a) Polyisocyanat,
(b) polymeren Verbindungen mit gegenüber Isocyanaten reaktiven Gruppen,
(c) Katalysatoren,
(d) 0,01 bis 1 Gew.-% eines aliphatischen Kohlenwasserstoffs (d1) mit 2 bis 15 Kohlenstoffatomen, der mindestens ein Heteroatom, ausgewählt aus der Gruppe, bestehend aus Sauerstoff, Stickstoff und Schwefel, und mindestens ein Chlor- oder Bromatom enthalten und/oder Phosphorsäureester (d2),
(e) Antioxidantien und/oder Lichtstabilisatoren und gegebenenfalls
(f) Treibmittel,
(g) Kettenverlängerungs- und oder Vernetzungsmittel und
(h) Hilfsmittel und/oder Zusatzstoffe
zu einer Reaktionsmischung vermischt und die Reaktionsmischung zum Polyurethan ausreagieren lässt,
wobei der Phosphorsäureester der allgemeinen Formel
(R¹-O)₃-P=O
entspricht, wobei die drei Reste R¹ unabhängig voneinander für organische Reste stehen, die eine oder mehrere Phenylgruppen, eine oder mehrere Phosphorsäuregruppen (Polyalkylphosphat mit Ethylenoxyd) oder deren Ester und/oder ein oder mehrere Atome, ausgewählt aus der Gruppe, bestehend aus Stickstoff, Sauerstoff, Fluor, Chlor und Brom, enthalten.

2. Verfahren nach Anspruch 1, **dadurch gekennzeichnet, dass** als Lichtstabilisatoren Derivate von 2,2,6,6-tetramethylpiperidin (HALS) eingesetzt werden.

3. Verfahren nach Anspruch 1, **dadurch gekennzeichnet, dass** als Antioxidantien Antioxidantien mit einer oder mehreren der allgemeinen Struktureinheiten, ausgewählt aus der Gruppe, bestehend aus Benzophenon, Benztriazol, Cyanoacrylat, Cinamat, sterisch gehindertem Phenol, Oxanilid, Formamidin, Triazin, Benzyliden-Malonat, Benzopyran, Sulfid oder Benzoat eingesetzt werden.

4. Verfahren nach einem der Ansprüche 1 bis 3, **dadurch gekennzeichnet, dass** der Anteil der Antioxidantien und Lichtstabilisatoren, bezogen auf das Gesamtgewicht der Komponenten (a) bis (h) mehr als 0,1 Gew.-% (0,3 bis 10; 0,5 bis 5) beträgt.

5. Verfahren nach einem der Ansprüche 1 bis 4, **dadurch gekennzeichnet, dass** die Antioxidantien und/oder Lichtstabilisatoren mindestens eine Ester- oder Ethergruppe enthält, wobei jeweils in Nachbarschaft zu den Sauerstoffatomen der Ester- oder Ethergruppe im Molekül des Antioxidans oder des Lichtstabilisators ein Kohlenstoffatom steht.

6. Verfahren nach einem der Ansprüche 1 bis 5, **dadurch gekennzeichnet, dass** der alipha-tische Kohlenwasserstoff (d1) ein oder mehrere Chloratome enthält.

7. Verfahren nach einem der Ansprüche 1 bis 6, **dadurch gekennzeichnet, dass** der alipha-tische Kohlenwasserstoff (d1) und oder der Phosphorsäureester (d2) gegenüber Polyisocyanaten (a) reaktive Gruppen aufweist.

8. Verfahren nach einem der Ansprüche 1 bis 7, **dadurch gekennzeichnet, dass** der aliphatische Kohlenwasserstoff (d1) mindestens 30 Gew.-%, bezogen auf das Gesamtgewicht der Komponente (d1) Chlor- und/oder Bromatome enthält.

9. Verfahren nach einem der Ansprüche 1 bis 4 und 7, **dadurch gekennzeichnet, dass** der Phosphorsäureester (d2) mindestens zwei Phosphatgruppen im Molekül enthält.

10. Verfahren nach einem der Ansprüche 1 bis 9, **dadurch gekennzeichnet, dass** das Polyurethan ein kompaktes Polyurethan mit einer mittleren Dichte von mehr als 850 g/L ist.

11. Polyurethan, herstellbar nach einem Verfahren gemäß einem der Ansprüche 1 bis 10.

12. Verwendung von Polyurethanen nach Anspruch 11 im Innenraum von Verkehrsmitteln.

13. Verwendung von Polyurethanen nach Anspruch 11 als Dichtungen für Scheiben in Automobilen.
